# EUROPÄISCHE PATENTSCHRIFT

(11) **EP 3 083 317 B1**
(45) Veröffentlichungstag und Bekanntmachung des Hinweises auf die Patenterteilung: **06.03.2019**
(21) Anmeldenummer: 14815315.8
(22) Anmeldetag: 15.12.2014
(51) Int. Cl.: B60K 37/06, G09F 13/12, G09F 13/04, H01H 13/02, H01H 9/18, H01H 13/83, B60Q 3/14

(54) **BELEUCHTETE ANZEIGEVORRICHTUNG, VERFAHREN ZUM BETRIEB EINER SOLCHEN ANZEIGEVORRICHTUNG, ELEKTRISCHES BEDIENELEMENT MIT EINER SOLCHEN ANZEIGEVORRICHTUNG UND VERFAHREN ZUM BETRIEB EINES SOLCHEN BEDIENELEMENTES**
ILLUMINATED DISPLAY DEVICE, METHOD FOR OPERATING SUCH A DISPLAY DEVICE, ELECTRICAL CONTROL ELEMENT HAVING SUCH A DISPLAY DEVICE AND METHOD FOR OPERATING SUCH A CONTROL ELEMENT
DISPOSITIF D'AFFICHAGE ÉCLAIRÉ, PROCÉDÉ DE FONCTIONNEMENT D'UN TEL DISPOSITIF D'AFFICHAGE, AUXILIAIRE DE COMMANDE ÉLECTRIQUE ÉQUIPÉ D'UN TEL DISPOSITIF D'AFFICHAGE ET PROCÉDÉ DE FONCTIONNEMENT D'UN TEL AUXILIAIRE DE COMMANDE

(30) Priorität: 17.12.2013 DE 102013021330
(43) Veröffentlichungstag der Anmeldung: 26.10.2016
(73) Patentinhaber: Valeo Schalter und Sensoren GmbH, 74321 Bietigheim-Bissingen (DE)
(72) Erfinder: INTINI, Onofrio, 74321 Bietigheim-Bissingen (DE); SCHOCH, Lars, 74321 Bietigheim-Bissingen (DE); MUELLER, Stefan, 74321 Bietigheim-Bissingen (DE)
(86) Internationale Anmeldenummer: PCT/EP2014/077759
(87) Internationale Veröffentlichungsnummer: WO 2015/091359

(56) Entgegenhaltungen:
- FR-A1- 2 928 223
- JP-A- H1 185 062

## Beschreibung

Die Erfindung betrifft eine beleuchtete Anzeigevorrichtung für ein elektrisches Bedienelement, insbesondere für ein elektrisches Bedienelement in einem Innenraum eines Kraftfahrzeugs, wobei die Anzeigevorrichtung einen einem Bediener zugewandten Anzeigebereich aufweist und zur Anzeige unterschiedlicher Symbole in diesem einen Anzeigebereich ausgebildet ist. Dazu weist die Anzeigevorrichtung mehrere Symbolmasken sowie wenigstens eine Lichtquelle auf, wobei jedem anzeigbaren Symbol eine Symbolmaske und eine Lichtquelle zugeordnet ist. Jede Symbolmaske weist dabei einen Projektionsbereich auf, der dazu ausgebildet ist, auf diesen Bereich auftreffendes Licht als das anzuzeigende Symbol in den Anzeigebereich zu projizieren. Die Erfindung betrifft außerdem ein Verfahren zum Betrieb einer solchen Anzeigevorrichtung, wie auch ein elektrisches Bedienelement mit einer solchen Anzeigevorrichtung sowie ein erfindungsgemäßes Verfahren zum Betrieb eines solchen Bedienelementes.

Mit zunehmender Anzahl von elektronischen Systemen, beispielsweise in Kraftfahrzeugen, nimmt auch die Anzahl der zur Bedienung dieser Systeme erforderlichen Bedienelemente zu. Es ist bekannt, dass ein Bediener bei einer zu hohen Anzahl von Bedienelementen aufgrund der vielen Bedienelemente mit den vielen Anzeigen zur Visualisierung ihrer Bedienfunktionen schnell den Überblick verlieren kann. Infolgedessen kann es zu einer erheblichen Verlängerung der Betätigungs- bzw. Bedienzeiten bei der Bedienung der jeweiligen Bedienelemente kommen. Eine Verlängerung der Bedienzeiten verschlechtert in der Regel den Bedienkomfort und kann sich insbesondere bei Kraftfahrzeugen nachteilig auf die Fahrsicherheit auswirken.

Insbesondere für den Innenraum von Kraftfahrzeugen wurden daher Bedienelemente entwickelt, die mehrere Bedienfunktionen aufweisen, der Bediener aber nur mittels einer Anzeige darüber informiert werden kann, welche Bedienfunktion des Bedienelementes gerade aktiviert ist und bei einer Betätigung des Bedienelementes umgesetzt wird. Dazu wurden Anzeigevorrichtungen für derartige Bedienelemente entwickelt, insbesondere beleuchtete Anzeigevorrichtungen, die unterschiedliche Symbole zur Visualisierung der unterschiedlichen Zustände des Bedienelementes in ein und demselben Anzeigebereich anzeigen können.

Eine gattungsgemäße Anzeigevorrichtung ist beispielsweise aus der FR 2 928 223 A1 bekannt. Eine weitere Anzeigevorrichtung zeigt die DE 10 2008 062 577 B3. Die in diesem Dokument beschriebene Anzeigevorrichtung weist beispielsweise eine als Projektionsfläche ausgebildete und einem Bediener zugewandte Abdeckung aus einer transparentem Klarlackschicht auf, auf welche die unterschiedlichen darzustellenden Symbole projiziert werden können. Die Projektion der unterschiedlichen Symbole erfolgt dabei, in dem eine Symbolmaske, d.h. eine Maske, in die das anzuzeigende Symbol eingearbeitet ist, entsprechend hinterleuchtet wird, d.h. von einer Lichtquelle durchstrahlt wird.

Es ist Aufgabe der Erfindung eine alternative, beleuchtete Anzeigevorrichtung für ein elektrisches Bedienelement bereitzustellen, insbesondere eine verbesserte und mit wenig Aufwand flexibel an die anzuzeigenden Symbole anpassbare Anzeigeeinrichtung, sowie ein Verfahren zum Betrieb einer solchen Anzeigevorrichtung, ein elektrisches Bedienelement mit einer solchen Anzeigevorrichtung und ein Verfahren zum Betrieb eines solchen Bedienelementes.

Diese Aufgabe wird erfindungsgemäß durch eine beleuchtete Anzeigevorrichtung, durch ein Verfahren zum Betrieb einer solchen Anzeigevorrichtung, durch ein elektrisches Bedienelement mit einer solchen Anzeigevorrichtung sowie durch ein Verfahren zum Betrieb eines solchen Bedienelementes mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße beleuchtete Anzeigevorrichtung für ein elektrisches Bedienelement, insbesondere für ein elektrisches Bedienelement in einem Innenraum eines Kraftfahrzeugs, weist einen einem Bediener zugewandten Anzeigebereich auf und ist zur Anzeige unterschiedlicher Symbole in diesem einen Anzeigebereich ausgebildet, wobei die Anzeigevorrichtung dazu mehrere Symbolmasken sowie wenigstens eine Lichtquelle aufweist. Dabei ist jedem anzeigbaren Symbol eine Symbolmaske und eine Lichtquelle zugeordnet und jede Symbolmaske weist einen Projektionsbereich auf, der dazu ausgebildet ist, auf diesen Bereich auftreffendes Licht als das anzuzeigende Symbol in den Anzeigebereich zu projizieren. Erfindungsgemäß ist vorgesehen, dass zur Anzeige des anzuzeigenden Symbols Licht von der dem Symbol zugeordneten Lichtquelle seitlich in die dem anzuzeigenden Symbol zugeordnete Symbolmaske einkoppelbar ist und innerhalb der Symbolmaske zum Projektionsbereich dieser Symbolmaske leitbar ist, wobei die Anzeigevorrichtung derart ausgebildet ist, dass die Symbolmaske zunächst als Lichtkanal wirkt und seitlich in die Symbolmaske eingekoppeltes Licht innerhalb der Symbolmaske reflektiert wird, bis das Licht auf den Projektionsbereich der Symbolmaske trifft, um von dort mittels dieses Projektionsbereichs zur Anzeige des Symbols in den Anzeigebereich projiziert zu werden.

Vorteilhaft an einer erfindungsgemäßen Anzeigeeinrichtung ist, dass mit einer geringen Bauhöhe der Anzeigeeinrichtung auf einfache Art und Weise eine Vielzahl unterschiedlicher Symbole in nur einem Anzeigebereich darstellbar ist. Ferner kann eine erfindungsgemäße Anzeigeeinrichtung schnell und einfach und damit sehr flexibel an unterschiedliche anzuzeigende Symbole angepasst werden, da hierfür nur die Symbolmasken entsprechend ausgetauscht werden müssen.

Ein elektrisches Bedienelement kann dabei ein übliches, aus dem Stand der Technik bekanntes Bedienelement sein, insbesondere ein Druckknopf, ein Drehrad, ein Kippschalter oder dergleichen.

Jedem anzeigbaren Symbol ist dabei wenigstens eine Symbolmaske zugeordnet, welche dazu ausgebildet ist, das zugehörige Symbol in den Anzeigebereich zu projizieren, d.h. für jedes anzeigbare Symbol ist wenigstens eine zugeordnete Symbolmaske vorgesehen, wobei die Symbolmasken den Symbolen nicht exklusiv zugeordnet sein müssen. D.h. eine Symbolmaske kann mehreren Symbolen zugeordnet sein. Es können aber auch mehrere Symbolmasken einem Symbol zugeordnet sein, wobei die von den Symbolmasken in den Anzeigebereich projizierten Symbole in diesem Fall vorzugsweise zu einem kombinierten Symbol überlagert werden können.

Jedem Symbol ist ferner wenigstens eine Lichtquelle zugeordnet, d.h. für jedes anzeigbare Symbol ist eine Lichtquelle vorhanden, wobei die Zuordnung der Lichtquelle zum Symbol ebenfalls nicht exklusiv sein muss. D.h. eine Lichtquelle kann auch mehreren Symbolen und damit Symbolmasken zugeordnet sein. Entsprechend können auch mehrere Lichtquellen einem Symbol zugeordnet sein, wobei mehrere einem Symbol zugeordnete Lichtquellen im Folgenden als eine Gruppe von Lichtquellen bezeichnet werden. In einigen Fällen kann es vorteilhaft sein, einer Symbolmaske statt nur einer Lichtquelle mehrere Lichtquellen, d.h. eine Gruppe von Lichtquellen, zuzuordnen, beispielsweise Lichtquellen unterschiedlicher Farbstrahlung. Werden Lichtquellen unterschiedlicher Farbstrahlung verwendet, können entsprechen Symbole mit nahezu beliebigen Farben, insbesondere beliebige Farben des RGB-Farbraumes, dargestellt werden.

In einer bevorzugten Ausgestaltung der Erfindung sind die Symbolmasken und die Lichtquelle auf einer vom Bediener abgewandten Seite des Anzeigebereichs angeordnet.

Vorzugsweise sind die Symbolmasken bzw. deren Projektionsbereiche derart ausgebildet, dass sie auf den Projektionsbereich auftreffendes Licht gegebenenfalls umlenken können, insbesondere reflektieren können, um das anzuzeigende Symbol in den Anzeigebereich zu projizieren.

Zur Anzeige eines Symbols mit einer erfindungsgemäßen Anzeigeeinrichtung ist es erforderlich, dass Licht seitlich in die Symbolmaske eingekoppelt wird. Dabei wird das Licht vorzugsweise seitlich vom Projektionsbereich in die Symbolmaske eingekoppelt, insbesondere in einer Ebene mit der Symbolmaske. Das Licht kann aber auch von Oberseite der Symbolfolie her, d.h. einer dem Anzeigebereich zugewandten Seite, oder von einer Unterseite her, d.h. eine vom Anzeigebereich abgewandte Seite, in die Symbolfolie bzw. den durch die Symbolfolie gebildeten Lichtkanal eingekoppelt werden. Wichtig ist nur, dass das Licht einen Weg innerhalb der Symbolmaske parallel zu einer Ebene der Symbolmaske bis zum Projektionsbereich zurücklegt.

Als Lichtquelle eignen sich besonders LEDs oder OLEDs, wobei die Lichtquellen vorzugsweise elektronisch ansteuerbar sind.

Erfindungsgemäß sind die Symbolmasken transparent und überlappend übereinander angeordnet sind, vorzugsweise derart, dass die Projektionsbereiche der Symbolmasken übereinander liegen.

Erfindungsgemäß ist wenigstens eine Symbolmaske zumindest teilweise transreflexiv im Projektionsbereich ausgebildet, derart, dass die Symbolmaske für von unten auf den Projektionsbereich auftreffendes Licht durchlässig ist und von oben auf den Projektionsbereich auftreffendes Licht reflektiert. Durch eine entsprechend ausgebildete, zumindest teilweise im Projektionsbereich transreflexive Symbolmaske, kann bei mehreren, überlappend übereinander angeordneten Symbolmasken auf einfache Art und Weise sichergestellt werden, dass von einem Projektionsbereich einer unteren Symbolmaske zur Projektion im Anzeigebereich reflektiertes Licht die darüber angeordnete Symbolmaske durchdringt und nicht von der darüber angeordneten Symbolmaske "zurückreflektiert" wird.

In einer bevorzugten Ausgestaltung ist oberhalb wenigstens einer Symbolmaske, vorzugsweise oberhalb jeder Symbolmaske, eine die Symbolmaske zumindest teilweise überdeckende und zumindest teilweise opake Schicht, d.h. eine lichtundurchlässige Schicht, angeordnet, wobei die Schicht dabei vorzugsweise in einem Bereich außerhalb des Projektionsbereichs der Symbolmaske opak und im Bereich des Projektionsbereichs der Symbolmaske transparent ausgebildet ist. Bevorzugt ist die Schicht dabei unmittelbar auf der Symbolmaske angeordnet.

Vorzugsweise ist die Schicht derart opak und transparent ausgebildet, dass sie durch ihren opaken Teil einen Austritt von Licht aus dem als Lichtkanal wirkenden Bereich der Symbolmaske nach oben verhindert und durch ihren transparenten Teil den Austritt von Licht im Bereich der Projektionsfläche aus der Symbolmaske ermöglicht. Durch die Anordnung einer zumindest teilweise opaken Schicht unmittelbar oberhalb einer Symbolmaske, insbesondere einer Schicht, die oberhalb des als Lichtkanal wirkenden Bereichs der Symbolmaske opak ist bzw. den Lichtkanal nach oben begrenzt, kann auf einfache Weise ein Austritt von Licht aus dem als Lichtkanal wirkenden Bereich der Symbolmaske nach oben verhindert werden.

Ist oberhalb jeder Symbolmaske eine derartige Schicht angeordnet und sind die Symbolmasken überlappend übereinander angeordnet, kann bei allen Symbolmasken außer bei der untersten Symbolmaske, auch ein Austritt von Licht aus der Symbolmaske nach unten verhindert werden. Um einen Austritt von Licht aus der untersten Symbolmaske zu verhindern, ist diese bevorzugt auf einer opaken Leiterplatte oder dergleichen angeordnet. Selbstverständlich kann auch unterhalb der untersten Symbolmaske eine derartige Schicht vorgesehen sein.

Vorzugsweise ist die Schicht durch eine Lackschicht gebildet, wobei der opake Teil der Schicht bevorzugt durch eine schwarze Lackschicht gebildet ist und der transparente Teil durch eine Klarlackschicht. Der transparente Teil kann aber auch durch eine transparente Kunststoffabdeckung oder durch eine bloße Aussparung in der opaken Schicht gebildet sein.

In einer bevorzugten Ausgestaltung ist jeder Symbolmaske genau eine Lichtquelle oder eine Gruppe von Lichtquellen, insbesondere eine Gruppe von Lichtquellen unterschiedlicher Farbe, exklusiv zugeordnet. Besonders bevorzugt sind die Lichtquellen bzw. die Gruppen von Lichtquellen dabei seitlich von der zugehörigen Symbolmaske angeordnet, insbesondere in einer Ebene mit der Symbolmaske. Besonders bevorzugt sind die Lichtquellen bzw. die Gruppen von Lichtquellen dabei unmittelbar angrenzend an die Symbolmasken angeordnet, insbesondere an deren Seitenflächen, so dass von einer Lichtquelle bzw. den Lichtquellen emittiertes Licht unmittelbar seitlich in die zugehörige Symbolmaske eingekoppelt wird. Durch eine derartige Anordnung können aufwendige Optiken entfallen, die, wenn nicht jeder Symbolmaske exklusiv eine Lichtquelle zugeordnet ist, d.h. wenn eine Lichtquelle mehreren Symbolmasken zugeordnet ist, zur seitlichen Einkopplung des Lichts in die jeweilige Symbolmaske erforderlich sind.

Weist die Anzeigevorrichtung mehrere, übereinander angeordnete Symbolmasken und mehrere Lichtquellen bzw. Gruppen von Lichtquellen auf und sind die Lichtquellen bzw. die Gruppen von Lichtquellen vorzugsweise jeweils seitlich neben einer der der Lichtquelle bzw. der Gruppe von Lichtquellen zugeordneten Symbolmaske angeordnet. Dabei ist es zur Minimierung einer Bauraumhöhe der Anzeigevorrichtung vorteilhaft, wenn die Lichtquellen übereinander seitlich versetzt angeordnet sind. In diesem Fall sind punktförmige Lichtquellen, d.h. Lichtquellen, die einen im wesentlichen punktförmigen Lichtstrahl emittieren, besonders vorteilhaft.

In einer bevorzugten Ausgestaltung ist jedem anzeigbaren Symbol genau eine Symbolmaske zugeordnet. Alternativ können einem anzeigbaren Symbol aber auch mehrere Symbolmasken zugeordnet werden, wobei dadurch die überlagerte Anzeige mehrerer Symbole zu einem Gesamt-Symbol ermöglicht wird.

In einer bevorzugten Ausgestaltung ist wenigstens eine Symbolmaske eine Symbolfolie. Durch die Verwendung von Symbolfolien als Symbolmasken kann eine besonders kompakte Anzeigevorrichtung bereitgestellt werden, insbesondere eine Anzeigevorrichtung mit einer geringen Bauhöhe. Dies ist umso vorteilhaft, je mehr unterschiedliche Symbole im Anzeigebereich darstellbar sein sollen, da desto mehr Symbolmasken erforderlich sind, je mehr unterschiedliche Symbole darstellbar sein sollen.

Bevorzugt ist der Anzeigebereich eine Anzeigefläche, wobei der Anzeigebereich besonders bevorzugt eine durch eine transparente Dekorationsfolie gebildete Anzeigefläche ist. Vorzugsweise ist der Anzeigebereich bzw. die Anzeigefläche, insbesondere die Dekorationsfolie, unmittelbar auf der obersten, zumindest teilweise opaken Schicht angeordnet. Dadurch kann ebenfalls eine kompakte Bauweise der Anzeigevorrichtung mit einer geringen Bauhöhe ermöglicht werden. Der Anzeigebereich kann aber auch durch eine transparente Kunststoffabdeckung oder dergleichen gebildet sein.

Ein erfindungsgemäßes Verfahren zum Betrieb einer vorbeschriebenen, erfindungsgemäßen Anzeigevorrichtung ist gekennzeichnet durch wenigstens die folgenden Schritte: Ansteuern und Aktivieren der dem anzuzeigenden Symbol zugeordneten Lichtquelle, so dass die dem Symbol zugeordnete Lichtquelle Licht emittiert, seitliches Einkoppeln des von der dem anzuzeigenden Symbol zugeordneten Lichtquelle emittierten Lichts in die dem anzuzeigenden Symbol zugeordnete Symbolmaske, Leiten des in die Symbolmaske eingekoppelten Lichts innerhalb der Symbolmaske zum Projektionsbereich dieser Symbolmaske, gegebenenfalls Umlenken des auf den Projektionsbereich auftreffenden Lichts und Projizieren des auf den Projektionsbereich auftreffenden Lichts als anzuzeigendes Symbol in den Anzeigebereich.

Ein erfindungsgemäßes elektrisches Bedienelement weist eine beleuchtete Anzeigevorrichtung auf. Erfindungsgemäß ist vorgesehen, dass die Anzeigevorrichtung eine vorbeschriebene, erfindungsgemäße Anzeigevorrichtung ist, wobei jeder Bedienfunktion des Bedienelementes ein anzeigbares Symbol zugeordnet ist. Vorzugsweise ist dabei jeder Bedienfunktion genau ein Symbol zugeordnet.

In einer Weiterbildung ist das Bedienelement derart ausgebildet, dass eine gewünschte Bedienfunktion vom Bediener auswählbar ist oder automatisch in Abhängigkeit eines Zustands einer mit dem Bedienelement bedienbaren Vorrichtung einstellbar ist. Bevorzugt kann die ausgewählte oder eingestellte Bedienfunktion durch die Anzeige des der Bedienfunktion zugeordneten Symbols im Anzeigebereich der Anzeigevorrichtung des Bedienelementes angezeigt werden.

Vorzugsweise kann der Bediener dabei die gewünschte Bedienfunktion durch eine manuelle Betätigung der Bedieneinrichtung oder durch eine Spracheingabe auswählen. Für die automatische Einstellung der Bedienfunktion weist die Anzeigevorrichtung bevorzugt einen sogenannten "Intelligent Switch" auf, d. h. einen Schalter, mit dem die Bedienfunktion in Abhängigkeit eines Zustand einer mit dem Bedienelement bedienbaren Vorrichtung eingestellt werden kann.

Ein erfindungsgemäßes Verfahren zum Betrieb eines vorbeschriebenen, erfindungsgemäßen Bedienelementes, insbesondere zur Anzeige einer ausgewählten oder automatisch eingestellten Bedienfunktion des Bedienelementes, ist gekennzeichnet durch die Schritte: Ermitteln der ausgewählten oder eingestellten Bedienfunktion, Ansteuern und Aktivieren der Lichtquelle, die dem der ermittelten Bedienfunktion zugeordneten Symbol zugeordnet ist, so dass die dem Symbol zugeordnete Lichtquelle Licht emittiert, seitliches Einkoppeln des von der dem anzuzeigenden Symbol zugeordneten Lichtquelle emittierten Lichts in die dem anzuzeigenden Symbol zugeordnete Symbolmaske, Leiten des in die Symbolmaske eingekoppelten Lichts innerhalb der Symbolmaske zum strukturierten Bereich dieser Symbolmaske, gegebenenfalls Umlenken des auf den strukturierten Bereich auftreffenden Lichts und Projizieren des auf den strukturierten Bereich auftreffenden Lichts als das anzuzeigende Symbol in den Anzeigebereich des elektrischen Bedienelementes.

Die mit Bezug auf die Anzeigevorrichtung vorgestellten bevorzugten Ausführungsformen und deren Vorteile gelten entsprechend für das erfindungsgemäße Verfahren zum Betrieb einer solchen Anzeigevorrichtung, für das elektrisches Bedienelement mit einer solchen Anzeigevorrichtung sowie für das Verfahren zum Betrieb des elektrischen Bedienelementes.

Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert.

Es zeigen:

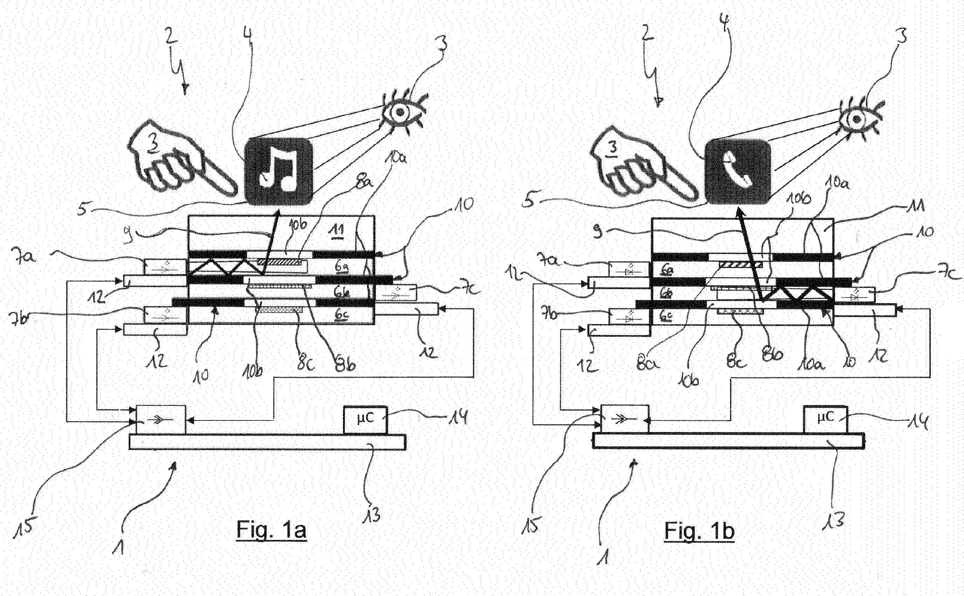

- Fig. 1a: schematisch ein Ausführungsbeispiel eines erfindungsgemäßen Bedienelements mit einer erfindungsgemäßen Anzeigevorrichtung in einem ersten Zustand und
- Fig. 1b: das erfindungsgemäße Bedienelement aus Fig. 1a in einem zweiten Zustand.

Fig. 1a zeigt schematisch ein Ausführungsbeispiel eines erfindungsgemäßen Bedienelements 2 mit einer erfindungsgemäßen, beleuchteten Anzeigevorrichtung 1 in einem ersten Zustand, in welchem eine erste Bedienfunktion ausgewählt ist.

Das erfindungsgemäße elektronische Bedienelement 2 ist bei diesem Ausführungsbeispiel ein hier nicht erkennbar dargestellter, beleuchteter Druckknopf für einen Innenraum eines Kraftfahrzeugs. Das Bedienelement 2 weist einen, einem Bediener 3 zugewandten Anzeigebereich 5 auf, in dem unterschiedliche Symbole 4 mittels der erfindungsgemäßen beleuchteten Anzeigevorrichtung 1 dargestellt werden können.

Die erfindungsgemäße Anzeigevorrichtung 1 ist im Sandwichaufbau ausgebildet und weist drei übereinander angeordnete Symbolmasken 6a, 6b und 6c auf, die als Symbolfolien 6a, 6b, 6c ausgebildet sind. Jede Symbolmaske 6a, 6b, 6c bzw. jede Symbolfolie 6a, 6b, 6c ist zur Darstellung genau eines Symbols 4 vorgesehen, wobei bei diesem Ausführungsbeispiel jedem Symbol 4 genau eine Symbolmaske 6a, 6b, 6c exklusiv zugeordnet ist. D.h. für jedes darzustellende Symbol 4 weist das Bedienelement 2 genau eine separate Symbolfolie 6a, 6b, 6c auf.

Zur Anzeige des einer Symbolfolie 6a, 6b oder 6c zugeordneten Symbols 4 weist jede Symbolfolie 6, 6b, 6c einen Projektionsbereich 8a, 8b, 8c auf, der durch einen speziell strukturierten Bereich gebildet ist und der dazu ausgebildet ist, auf diesen Bereich auftreffendes Licht als das anzuzeigende Symbol 4 in den Anzeigebereich 5 zu projizieren.

Jedes Symbol 4 ist dabei aus zugehörigen Micropixeln zusammengesetzt, die über einen Heißprägeprozess mechanisch in die Symbolfolie 6a, 6b, 6c aus PMMA oder PC-Material eingeprägt werden. Die Prägung kann insbesonders über ein Roll-Prägverfahren, insbesonders Roll-to-Roll-Verfahren erfolgen.

Die erfindungsgemäße Anzeigevorrichtung 1 weist drei Lichtquellen 7a, 7b, 7c auf, bei denen es sich bei diesem Ausführungsbeispiel jeweils um einfarbige LEDs handelt, die zur Anzeige des gewünschten Symbols 4 die Lichtquellen 7a, 7b, 7c jeweils einzeln mittels eines Mikrocontrollers 14 angesteuert und aktiviert werden können. Dabei sind die einzelnen LEDs 7a, 7b, 7c jeweils über eine flexible Leiterplatte 12 mittels eines Kollektors 15 mit einer Leiterplatte 13 elektrisches gekoppelt, mit welcher der Mikrokontroller elektrisch gekoppelt ist.

Jeder Symbolfolie 6a, 6b, 6c ist bei diesem Ausführungsbeispiel genau eine Lichtquelle 7a, 7b, 7c exklusiv zugeordnet, wobei die Lichtquellen 7a, 7b, 7c jeweils in einer Ebene mit den Symbolmasken 6a, 6b, 6c liegen und jeweils seitlich unmittelbar angrenzend an die zugeordneten Symbolfolien 6a, 6b und 6c angeordnet sind. Durch diese Anordnung kann von den Lichtquellen 7a, 7b, 7c emittiertes Licht unmittelbar ohne aufwendige Optiken seitlich in die Symbolfolien 6a, 6b, 6c eingekoppelt werden. Die Lichtquellen 7a, 7b, 7c sind dabei im Wechsel seitlich versetzt, d.h. im Wechsel auf der linken und der rechten Seite der Symbolfolien 6a, 6b, 6c angeordnet, um eine geringe Bauhöhe der Anzeigevorrichtung 1 und damit des Bedienelements 2 zu erreichen.

Die Symbolfolien 6a, 6b und 6c sind transparent ausgebildet, so dass seitlich in eine Symbolfolie 6a, 6b, 6c eingekoppeltes Licht zum Projektionsbereich 8a, 8b, 8c der jeweiligen Symbolfolie 6a, 6b, 6c geleitet wird, wobei die Symbolfolien 6a, 6b, 6c dabei zunächst als Lichtkanal wirken, bis das Licht auf den Projektionsbereich 8a, 8b, 8c trifft.

Die Symbolfolien 6a, 6b und 6c sind derart überlappend übereinander angeordnet, dass die Projektionsbereiche 8a, 8b, 8c der Symbolmasken bzw. der Symbolfolien 6a, 6b, 6c übereinander angeordnet sind. Ferner sind die Symbolfolien 6a, 6b, 6c insbesondere in den Projektionsbereichen 8a, 8b, 8c transreflexiv ausgebildet, insbesondere derart, dass die Symbolfolien 6a, 6b, 6c für von unten auf die Projektionsbereiche 8a, 8b, 8c auftreffendes Licht durchlässig ist, von oben insbesondere auf die Projektionsbereiche 8a, 8b, 8c auftreffendes Licht jedoch reflektiert wird. Dadurch kann erreicht werden, dass ein Lichtstrahl von einer Symbolfolie 6a, 6b, 6c nach oben in den Anzeigebereich 5 projiziert werden kann und nicht von einer oberhalb der den Lichtstrahl projizierenden Symbolfolie "zurückreflektiert" wird, wodurch Transmissionsverluste verringert werden können, was sich vorteilhaft auf die Anzeigequalität auswirkt.

Oberhalb jeder Symbolfolie 6a, 6b, 6c ist zusätzlich jeweils eine Schicht 10 angeordnet mit einem opaken, d.h. lichtundurchlässigen Bereich 10a außerhalb der Projektionsbereiche 8a, 8b, 8c und einem transparenten Bereich 10b, der oberhalb der Projektionsbereiche 8a, 8b, 8c angeordnet ist. Der opake Teil 10a der Schicht 10 ist bei diesem Ausführungsbeispiel durch eine schwarze, lichtundurchlässige Lackschicht 10a gebildet, während der lichtdurchlässige Bereich 10b durch eine transparente Klarlackschicht gebildet ist. Die Schicht 10 kann aber auch durch eine entsprechende Kunststoffabdeckung oder dergleichen oder durch eine Kombination aus einer Kunststoffabdeckung und einer Lackschicht ausgebildet sein. Durch die Schichten 10 kann jeweils eine Auskopplung des in eine Symbolfolie 6a, 6b, 6c seitlich eingekoppelten Lichts im Bereich des Lichtkanals verhindert werden, wodurch die Transmissionsverluste weiter verringert werden können.

Für eine effiziente Einkopplung des Lichts von den Lichtquellen 7a, 7b, 7c erstreckt sich der opake Teil 10a der Schicht 10 vorzugsweise, wie bei diesem Ausführungsbeispiel bei den Lichtquellen 7b und 7c, bis über die Lichtquellen 7b, 7c seitlich hinaus.

Oberhalb der obersten Symbolfolie 6a ist eine Dekorationsfolie 11 als Abdeckung angeordnet, welche auch den Anzeigebereich 5 bildet bzw. in diesem Fall eine Anzeigefläche 5.

Fig. 1a zeigt dabei das erfindungsgemäße Bedienelement 2 in einem ersten Zustand wobei in diesem Zustand eine Bedienfunktion "Musikwiedergabe" ausgewählt ist, was dem Bediener 3 durch ein Notensymbol 4 im Anzeigebereich 5 visualisiert wird. Um das gewünschte Symbol 4 darzustellen, in diesem Fall das Notensymbol 4, dass der Symbolfolie 6a zugeordnet ist, der wiederum die Lichtquelle 7a zugeordnet ist, wird die Lichtquelle 7a vom Mikrokontroller 14 angesteuert und aktiviert, so dass die Lichtquelle 7a Licht 9 emittiert. Durch die vorbeschriebene Anordnung der Lichtquelle 7a, unmittelbar seitlich an die Symbolfolie 6a angrenzend, wird das Licht 9 seitlich in die Symbolfolie 6a eingekoppelt und innerhalb der Symbolfolie 6a, die zunächst als Lichtkanal wirkt, insbesondere zusammen mit den Schichten 10, zum Projektionsbereich 8a geleitet. Im transreflexiv ausgebildeten Projektionsbereich 8a tritt das Licht 9 aus der Symbolfolie 8a aus und wird in den Anzeigebereich 5 projiziert und als Notensymbol 4 für den Bediener sichtbar.

Das Bedienelement 2 verfügt über mehrere Bedienfunktionen, beispielsweise "Musikwiedergabe" oder "Telefonfunktion", siehe Fig. 1b, die vom Bediener entweder manuell oder mittels Sprachsteuerung ausgewählt werden können oder sich automatisch einstellen, wie beispielsweise die "Telefonfunktion", die sich automatisch einstellt, wenn ein Anruf auf einem mit dem Kraftfahrzeug gekoppelten Telefon eingeht. Dabei ist jeder Bedienfunktion genau ein Symbol 4 zugeordnet und die ausgewählte bzw. eingestellte Bedienfunktion wird im Anzeigebereich 5 dargestellt, was vorstehend beispielhaft anhand der "Musikwiedergabe" in Fig. 1a erläutert worden ist.

Fig. 1b der zeigt das Bedienelement 2 aus Fig. 1a in einem anderen Zustand, nämlich mit der "Telefonfunktion" als ausgewählter Bedienfunktion, was dem Bediener 3 mittels eines Telefonhörer-Symbols 4 im Anzeigebereich 5 visualisiert wird. Das Telefonhörer-Symbol 4 ist der Symbolmaske 6b sowie der Lichtquelle 7c zugeordnet. Um das Telefonhörer-Symbol 4 anzuzeigen, wird die Lichtquelle 7c vom Mikrokontroller 14 angesteuert und aktiviert, so dass die Lichtquelle 7c Licht 9 emittiert. Durch die vorbeschriebene Anordnung der Lichtquelle 7c, unmittelbar seitlich an die Symbolfolie 6b angrenzend, wird das Licht 9 in die Symbolfolie 6b eingekoppelt und innerhalb der Symbolfolie 6b, die zunächst als Lichtkanal wirkt, insbesondere zusammen mit den Schichten 10, zum Projektionsbereich 8b geleitet. Im transreflexiv ausgebildeten Projektionsbereich 8b tritt das Licht 9 aus der Symbolfolie 8b aus und wird in den Anzeigebereich 5 projiziert und als Notensymbol 4 für den Bediener sichtbar, wobei das Licht in diesem Fall 9 noch die oberhalb angeordnete Symbolfolie 6a sowie die darüber angeordnete Schicht 10 passiert.

Selbstverständlich ist eine Vielzahl konstruktiver Abwandlungen zu dem erläuterten Ausführungsbeispiel möglich, ohne den Inhalt der Patentansprüche zu verlassen.

Insbesondere ist die Anzahl der darzustellenden Symbole bzw. der Symbolmasken innerhalb der Grenzen des zur Verfügung stehenden Bauraums nahezu beliebig wählbar.

## Patentansprüche

1. Beleuchtete Anzeigevorrichtung (1) für ein elektrisches Bedienelement (2), insbesondere für ein elektrisches Bedienelement (2) in einem Innenraum eines Kraftfahrzeugs, wobei die Anzeigevorrichtung (1) einen einem Bediener (3) zugewandten Anzeigebereich (5) aufweist und zur Anzeige unterschiedlicher Symbole (4) in diesem einen Anzeigebereich (5) ausgebildet ist und dazu mehrere Symbolmasken (6a, 6b, 6c) sowie wenigstens eine Lichtquelle (7a, 7b, 7c) aufweist, wobei jedem anzeigbaren Symbol (4) eine Symbolmaske (6a, 6b, 6c) und eine Lichtquelle (7a, 7b, 7c) zugeordnet sind, wobei jede Symbolmaske (6a, 6b, 6c) einen Projektionsbereich (8a, 8b, 8c) aufweist, der dazu ausgebildet ist, auf diesen Bereich auftreffendes Licht als das anzuzeigende Symbol (4) in den Anzeigebereich (5) zu projizieren, wobei zur Anzeige des anzuzeigenden Symbols (4) Licht von der dem Symbol (4) zugeordneten Lichtquelle (7a, 7b, 7c) seitlich in die dem anzuzeigenden Symbol (4) zugeordnete Symbolmaske (6a, 6b, 6c) einkoppelbar ist und innerhalb der Symbolmaske (6a, 6b, 6c) zum Projektionsbereich (8a, 8b, 8c) dieser Symbolmaske (6a, 6b, 6c) leitbar ist, und wobei die Anzeigevorrichtung (1) derart ausgebildet ist, dass die Symbolmaske (6a, 6b, 6c) zunächst als Lichtkanal wirkt und seitlich in die Symbolmaske (6a, 6b, 6c) eingekoppeltes Licht innerhalb der Symbolmaske (6a, 6b, 6c) reflektiert wird, bis das Licht auf den Projektionsbereich (8a, 8b, 8c) der Symbolmaske (6a, 6b, 6c) trifft, um von dort mittels dieses Projektionsbereichs (8a, 8b, 8c) zur Anzeige des Symbols (4) in den Anzeigebereich (5) projiziert zu werden, wobei die Symbolmasken (6a, 6b, 6c) transparent sind und überlappend übereinander angeordnet sind, **dadurch gekennzeichnet, dass** die Projektionsbereiche (8a, 8b, 8c) der Symbolmasken (6a, 6b, 6c) überlappend übereinander liegen, und dass wenigstens eine Symbolmaske (6a, 6b, 6c) zumindest teilweise transreflektiv ausgebildet ist im Projektionsbereich (8a, 8b, 8c), und zwar derart, dass die Symbolmaske (6a, 6b, 6c) für von unten auf den Projektionsbereich (8a, 8b, 8c) auftreffendes Licht durchlässig ist und von oben auf den Projektionsbereich (8a, 8b, 8c) auftreffendes Licht reflektiert.

2. Anzeigevorrichtung (1) nach einem der vorhergehenden Ansprüche,
**dadurch gekennzeichnet, dass** oberhalb wenigstens einer Symbolmaske (6a, 6b, 6c), vorzugsweise oberhalb jeder Symbolmaske (6a, 6b, 6c), eine die Symbolmaske (6a, 6b, 6c) zumindest teilweise überdeckende und zumindest teilweise opake Schicht angeordnet ist, wobei die Schicht insbesondere derart ausgebildet ist, dass die Schicht außerhalb des Projektionsbereichs (8a, 8b, 8c) der Symbolmaske (6a, 6b, 6c) opak und im Bereich des Projektionsbereichs (8a, 8b, 8c) der Symbolmaske (6a, 6b, 6c) transparent ausgebildet ist.

3. Anzeigevorrichtung (1) nach einem der vorhergehenden Ansprüche,
**dadurch gekennzeichnet, dass** jeder Symbolmaske (6a, 6b, 6c) genau eine Lichtquelle (7a, 7b, 7c) oder genau eine Gruppe von Lichtquellen exklusiv zugeordnet ist, wobei die Lichtquellen (7a, 7b, 7c) und/oder die Gruppen von Lichtquellen (7a, 7b, 7c) vorzugsweise jeweils seitlich von der zugeordneten Symbolmaske (6a, 6b, 6c) angeordnet sind, insbesondere in einer Ebene mit der Symbolmaske (6a, 6b, 6c).

4. Anzeigevorrichtung (1) nach einem der vorhergehenden Ansprüche,
**dadurch gekennzeichnet, dass** jedem anzeigbaren Symbol (4) genau eine Symbolmaske (6a, 6b, 6c) zugeordnet ist.

5. Anzeigevorrichtung (1) nach einem der vorhergehenden Ansprüche,
**dadurch gekennzeichnet, dass** wenigstens eine Symbolmaske (6a, 6b, 6c) eine Symbolfolie ist.

6. Anzeigevorrichtung (1) nach einem der vorhergehenden Ansprüche,
**dadurch gekennzeichnet, dass** der Anzeigebereich (5) eine Anzeigefläche ist, vorzugsweise eine durch eine transparente Dekorationsfolie (11) gebildete Anzeigefläche.

7. Verfahren zum Betrieb einer Anzeigevorrichtung (1), die nach einem der Ansprüche 1 bis 6 ausgebildet ist zur Anzeige eines der anzeigbaren Symbole (4), **dadurch gekennzeichnet, dass** das Verfahren wenigstens die folgenden Schritte aufweist:
- Ansteuern und Aktivieren der dem anzuzeigenden Symbol (4) zugeordneten Lichtquelle (7a, 7b, 7c), so dass die dem Symbol (4) zugeordnete Lichtquelle (7a, 7b, 7c) Licht emittiert,
- Seitliches Einkoppeln des von der dem anzuzeigenden Symbol (4) zugeordneten Lichtquelle (7a, 7b, 7c) emittierten Lichts in die dem anzuzeigenden Symbol (4) zugeordnete Symbolmaske (6a, 6b, 6c),
- Leiten des in die Symbolmaske (6a, 6b, 6c) eingekoppelten Lichts innerhalb der Symbolmaske (6a, 6b, 6c) zum Projektionsbereich (8a, 8b, 8c) dieser Symbolmaske (6a, 6b, 6c),
- Gegebenenfalls Umlenken des auf den Projektionsbereich (8a, 8b, 8c) auftreffenden Lichts und
- Projizieren des auf den Projektionsbereich (8a, 8b, 8c) auftreffenden Lichts als anzuzeigendes Symbol (4) in den Anzeigebereich (5).

8. Elektrisches Bedienelement (2) mit einer beleuchteten Anzeigevorrichtung (1), **dadurch gekennzeichnet, dass** die Anzeigevorrichtung (1) nach einem der Ansprüche 1 bis 6 ausgebildet ist, wobei jeder Bedienfunktion des Bedienelements (2) ein anzuzeigendes Symbol (4) zugeordnet ist, vorzugsweise genau ein Symbol (4).

9. Elektrisches Bedienelement (2) nach Anspruch 8, **dadurch gekennzeichnet, dass** das Bedienelement (2) derart ausgebildet ist, dass eine gewünschte Bedienfunktion vom Bediener (3) auswählbar ist oder automatisch in Abhängigkeit eines Zustands einer mit dem Bedienelement (2) bedienbaren Vorrichtung einstellbar ist, wobei vorzugsweise die ausgewählte und/oder eigestellte Bedienfunktion durch die Anzeige des der Bedienfunktion zugeordneten Symbols (4) im Anzeigebereich (5) der Anzeigevorrichtung (1) des Bedienelementes (2) anzeigbar ist.

10. Verfahren zum Betrieb eines Bedienelementes (2), das nach Anspruch 9 ausgebildet ist zur Anzeige einer ausgewählten oder automatisch eingestellten Bedienfunktion des Bedienelementes (2), **dadurch gekennzeichnet, dass** das Verfahren wenigsten die folgenden Schritte aufweist:
- Ermitteln der ausgewählten oder eingestellten Bedienfunktion,
- Ansteuern und Aktivieren der Lichtquelle (7a, 7b, 7c), die dem der ermittelten Bedienfunktion zugeordneten Symbol (4) zugeordnet ist, so dass die dem Symbol zugeordnete Lichtquelle (7a, 7b, 7c) Licht emittiert,
- Seitliches Einkoppeln des von der dem anzuzeigenden Symbol (4) zugeordneten Lichtquelle (7a, 7b, 7c) emittierten Lichts in die dem anzuzeigenden Symbol (4) zugeordnete Symbolmaske (6a, 6b, 6c),
- Leiten des in die Symbolmaske (6a, 6b, 6c) eingekoppelten Lichts innerhalb der Symbolmaske (6a, 6b, 6c) zum Projektionsbereich (8a, 8b, 8c) dieser Symbolmaske (6a, 6b, 6c),
- Gegebenenfalls Umlenken des auf den Projektionsbereich (8a, 8b, 8c) auftreffenden Lichts und
- Projizieren des auf den Projektionsbereich (8a, 8b, 8c) auftreffenden Lichts als das anzuzeigende Symbol (4) in den Anzeigebereich (5) des elektrischen Bedienelementes (2).

## Claims

1. Illuminated display device (1) for an electrical control element (2), in particular for an electrical control element (2) in an interior of a motor vehicle, wherein the display device (1) comprises a display region (5) facing an operator (3) and is configured to display various symbols (4) in this one display region (5) and to that end comprises a plurality of symbol masks (6a, 6b, 6c) and also at least one light source (7a, 7b, 7c), wherein a symbol mask (6a, 6b, 6c) and a light source (7a, 7b, 7c) are assigned to each displayable symbol (4), wherein each symbol mask (6a, 6b, 6c) comprises a projection region (8a, 8b, 8c) configured to project light impinging on this region as the symbol (4) to be displayed into the display region (5), wherein, in order to display the symbol (4) to be displayed, light from the light source (7a, 7b, 7c) assigned to the symbol (4) is couplable laterally into the symbol mask (6a, 6b, 6c) assigned to the symbol (4) to be displayed and is guidable within the symbol mask (6a, 6b, 6c) to the projection region (8a, 8b, 8c) of said symbol mask (6a, 6b, 6c), and wherein the display device (1) is configured in such a way that the symbol mask (6a, 6b, 6c) firstly acts as a light channel and light coupled laterally into the symbol mask (6a, 6b, 6c) is reflected within the symbol mask (6a, 6b, 6c) until the light impinges on the projection region (8a, 8b, 8c) of the symbol mask (6a, 6b, 6c) in order to be projected from there into the display region (5) by means of said projection region (8a, 8b, 8c) for the display of the symbol (4), wherein the symbol masks (6a, 6b, 6c) are transparent and are arranged in an overlapping manner one above another, **characterized in that** the projection regions (8a, 8b, 8c) of the symbol masks (6a, 6b, 6c) lie in an overlapping manner one above another, and **in that** at least one symbol mask (6a, 6b, 6c) is configured to be at least partly transreflective in the projection region (8a, 8b, 8c), specifically in such a way that the symbol mask (6a, 6b, 6c) is transmissive to light impinging on the projection region (8a, 8b, 8c) from below and reflects light impinging on the projection region (8a, 8b, 8c) from above.

2. Display device (1) according to any of the preceding claims, **characterized in that** above at least one symbol mask (6a, 6b, 6c), preferably above each symbol mask (6a, 6b, 6c), there is arranged a layer which is at least partly opaque and at least partly covers the symbol mask (6a, 6b, 6c), wherein the layer is configured in particular in such a way that the layer is configured to be opaque outside the projection region (8a, 8b, 8c) of the symbol mask (6a, 6b, 6c) and transparent in the region of the projection region (8a, 8b, 8c) of the symbol mask (6a, 6b, 6c).

3. Display device (1) according to any of the preceding claims, **characterized in that** exactly one light source (7a, 7b, 7c) or exactly one group of light sources is exclusively assigned to each symbol mask (6a, 6b, 6c), wherein the light sources (7a, 7b, 7c) and/or the groups of light sources (7a, 7b, 7c) are preferably arranged in each case laterally with respect to the assigned symbol mask (6a, 6b, 6c), in particular in one plane with the symbol mask (6a, 6b, 6c).

4. Display device (1) according to any of the preceding claims, **characterized in that** exactly one symbol mask (6a, 6b, 6c) is assigned to each displayable symbol (4).

5. Display device (1) according to any of the preceding claims, **characterized in that** at least one symbol mask (6a, 6b, 6c) is a symbol film.

6. Display device (1) according to any of the preceding claims, **characterized in that** the display region (5) is a display surface, preferably a display surface formed by a transparent decorative film (11).

7. Method for operating a display device (1) configured according to any of Claims 1 to 6 for the display of one of the displayable symbols (4), **characterized in that** the method comprises at least the following steps:
- driving and activating the light source (7a, 7b, 7c) assigned to the symbol (4) to be displayed, such that the light source (7a, 7b, 7c) assigned to the symbol (4) emits light,
- laterally coupling the light emitted by the light source (7a, 7b, 7c) assigned to the symbol (4) to be displayed into the symbol mask (6a, 6b, 6c) assigned to the symbol (4) to be displayed,
- guiding the light coupled into the symbol mask (6a, 6b, 6c) within the symbol mask (6a, 6b, 6c) to the projection region (8a, 8b, 8c) of said symbol mask (6a, 6b, 6c),
- if appropriate deflecting the light impinging on the projection region (8a, 8b, 8c), and
- projecting the light impinging on the projection region (8a, 8b, 8c) as symbol (4) to be displayed into the display region (5).

8. Electrical control element (2) having an illuminated display device (1), **characterized in that** the display device (1) is configured according to any of Claims 1 to 6, wherein a symbol (4) to be displayed, preferably exactly one symbol (4), is assigned to each control function of the control element (2).

9. Electrical control element (2) according to Claim 8, **characterized in that** the control element (2) is configured in such a way that a desired control function is selectable by the operator (3) or is settable automatically depending on a state of a device that is controllable by the control element (2), wherein preferably the selected and/or set control function is displayable by the display of the symbol (4) assigned to the control function in the display region (5) of the display device (1) of the control element (2).

10. Method for operating a control element (2) configured according to Claim 9 for the display of a selected or automatically set control function of the control element (2), **characterized in that** the method comprises at least the following steps:
- determining the selected or set control function,
- driving and activating the light source (7a, 7b, 7c) assigned to the symbol (4) assigned to the control function determined, such that the light source (7a, 7b, 7c) assigned to the symbol (4) emits light,
- laterally coupling the light emitted by the light source (7a, 7b, 7c) assigned to the symbol (4) to be displayed into the symbol mask (6a, 6b, 6c) assigned to the symbol (4) to be displayed,
- guiding the light coupled into the symbol mask (6a, 6b, 6c) within the symbol mask (6a, 6b, 6c) to the projection region (8a, 8b, 8c) of said symbol mask (6a, 6b, 6c),
- if appropriate deflecting the light impinging on the projection region (8a, 8b, 8c), and
- projecting the light impinging on the projection region (8a, 8b, 8c) as the symbol (4) to be displayed into the display region (5) of the electrical control element (2).

## Revendications

1. Dispositif d'affichage éclairé (1) destiné à un élément de commande électrique (2), en particulier à un élément de commande électrique (2) dans un habitacle de véhicule automobile, dans lequel le dispositif d'affichage (1) comporte une zone d'affichage (5) dirigée vers un opérateur (3) et est conçu pour afficher différents symboles (4) dans cette zone d'affichage (5) et comporte à cet effet plusieurs masques de symboles (6a, 6b, 6c) ainsi qu'au moins une source lumineuse (7a, 7b, 7c),
dans lequel un masque de symbole (6a, 6b, 6c) et une source lumineuse (7a, 7b, 7c) sont associés à chaque symbole affichable (4), dans lequel chaque masque de symbole (6a, 6b, 6c) comporte une zone projection (8a, 8b, 8c) qui est conçue pour projeter la lumière incidente sur ladite zone sous la forme du symbole (4) à afficher dans la zone affichage (5), dans lequel, pour afficher le symbole (4) à afficher, la lumière provenant de la source lumineuse (7a, 7b, 7c) associée au symbole (4) peut être injectée latéralement dans le masque de symbole (6a, 6b, 6c) associé au symbole (4) à afficher et peut être guidée à l'intérieur du masque de symbole (6a, 6b, 6c) jusqu'à la zone de projection (8a, 8b, 8c) de ce masque de symbole (6a, 6b, 6c), et dans lequel le dispositif d'affichage (1) est conçu de manière à ce que le masque de symbole (6a, 6b, 6c) agisse d'abord comme un guide de lumière et que la lumière injectée latéralement dans le masque de symbole (6a, 6b, 6c) soit réfléchie à l'intérieur du masque de symbole (6a, 6b, 6c) jusqu'à ce que la lumière atteigne la zone de projection (8a, 8b, 8c) du masque de symbole (6a, 6b, 6c) afin d'être projetée à partir de là, au moyen de cette zone de projection (8a, 8b, 8c), pour afficher le symbole (4) dans la zone d'affichage (5), dans lequel les masques de symboles (6a, 6b, 6c) sont transparents et sont disposés de manière à se chevaucher les uns les autres,
**caractérisé en ce que** les zones de projection (8a, 8b, 8c) des masques de symboles (6a, 6b, 6c) se situent de manière à se chevaucher les unes les autres, et **en ce qu'**au moins un masque de symbole (6a, 6b, 6c) est réalisé de manière au moins partiellement réfléchissante dans la zone de projection (8a, 8b, 8c) et cela, de telle manière que le masque de symbole (6a, 6b, 6c) soit transparent à la lumière incidente par le bas sur la zone de projection (8a, 8b, 8c) et qu'il réfléchisse la lumière incidente par le haut sur la zone de projection (8a, 8b, 8c).

2. Dispositif d'affichage (1) selon l'une des revendications précédentes,
**caractérisé en ce qu'**il est prévu au-dessus d'au moins un masque de symbole (6a, 6b, 6c), de préférence au-dessus de chaque masque de symbole (6a, 6b, 6c), une couche recouvrant au moins partiellement le masque de symbole (6a, 6b, 6c) et au moins partiellement opaque, dans lequel la couche est en particulier réalisée de telle manière que la couche soit opaque en dehors de la zone de projection (8a, 8b, 8c) du masque de symbole (6a, 6b, 6c) et transparente dans la région de la zone de projection (8a, 8b, 8c) du masque de symbole (6a, 6b, 6c).

3. Dispositif d'affichage (1) selon l'une des revendications précédentes, **caractérisé en ce que** chaque masque de symbole (6a, 6b, 6c) est exclusivement associé à exactement une source lumineuse (7a, 7b, 7c) ou à exactement un groupe de sources lumineuses, dans lequel les sources lumineuses (7a, 7b, 7c) et/ou les groupes de sources lumineuses (7a, 7b, 7c) sont de préférence disposés latéralement par rapport au masque de symbole (6a, 6b, 6c) associé, notamment dans un plan qui contient le masque de symbole (6a, 6b, 6c).

4. Dispositif d'affichage (1) selon l'une des revendications précédentes, **caractérisé en ce qu'**un masque de symbole (6a, 6b, 6c) est associé exactement à chaque symbole (4) affichable.

5. Dispositif d'affichage (1) selon l'une des revendications précédentes, **caractérisé en ce qu'**au moins un masque de symbole (6a, 6b, 6c) est un film de symbole.

6. Dispositif d'affichage (1) selon l'une des revendications précédentes, **caractérisé en ce que** la zone d'affichage (5) est une surface d'affichage, de préférence une surface d'affichage formée par un film décoratif transparent (11).

7. Procédé de mise en oeuvre d'un dispositif d'affichage (1) qui est réalisé selon l'une des revendications 1 à 6 pour afficher l'un des symboles affichables (4), **caractérisé en ce que** le procédé comprend au moins les étapes suivantes :
- commander et activer la source lumineuse (7a, 7b, 7c) qui est associée au symbole (4) à afficher de manière à ce que la source lumineuse (7a, 7b, 7c) associée au symbole (4) émette de la lumière,
- injecter latéralement la lumière émise par la source lumineuse (7a, 7b, 7c) associée au symbole (4) à afficher dans le masque de symbole (6a, 6b, 6c) associé au symbole (4) à afficher,
- guider la lumière injectée dans le masque de symbole (6a, 6b, 6c) à l'intérieur du masque de symbole (6a, 6b, 6c) vers la zone de projection (8a, 8b, 8c) de ce masque de symbole (6a, 6b, 6c),
- le cas échéant, dévier la lumière incidente vers la zone de projection (8a, 8b, 8c), et
- projeter la lumière incidente sur la zone de projection (8a, 8b, 8c) sous la forme d'un symbole (4) à afficher dans la zone d'affichage (5).

8. Élément de commande électrique (2) comportant un dispositif d'affichage éclairé (1), **caractérisé en ce que** le dispositif d'affichage (1) est conçu selon l'une des revendications 1 à 6, dans lequel un symbole (4) à afficher, de préférence exactement un symbole (4), est associé à chaque fonction de commande de l'élément de commande (2).

9. Élément de commande électrique (2) selon la revendication 8, **caractérisé en ce que** l'élément de commande (2) est réalisé de manière à ce que l'opérateur (3) puisse sélectionner une fonction de commande souhaitée ou la régler automatiquement en fonction d'un état d'un dispositif pouvant être commandé au moyen de l'élément de commande (2), dans lequel la fonction de commande sélectionnée et/ou réglée peut de préférence être affichée en affichant le symbole (4) associé à la fonction de commande dans la zone d'affichage (5) du dispositif d'affichage (1) de l'élément de commande (2).

10. Procédé de mise en oeuvre d'un élément de commande (2) réalisé selon la revendication 9 pour afficher une fonction de commande sélectionnée ou réglée automatiquement de l'élément de commande (2), **caractérisé en ce que** le procédé comprend au moins les étapes suivantes :
- déterminer la fonction de commande sélectionnée ou réglée,
- commander et activer la source lumineuse (7a, 7b, 7c) qui est associée au symbole (4) associé à la fonction de commande déterminée de manière à ce que la source lumineuse (7a, 7b, 7c) associée au symbole émette de la lumière,
- injecter latéralement la lumière émise par la source lumineuse (7a, 7b, 7c) associée au symbole (4) à afficher dans le masque de symbole (6a, 6b, 6c) associé au symbole (4) à afficher,
- guider la lumière injectée dans le masque de symbole (6a, 6b, 6c) à l'intérieur du masque de symbole (6a, 6b, 6c) vers la zone de projection (8a, 8b, 8c) de ce masque de symbole (6a, 6b, 6c),
- le cas échéant, dévier la lumière incidente vers la zone de projection (8a, 8b, 8c), et
- projeter la lumière incidente sur la zone de projection (8a, 8b, 8c) sous la forme du symbole (4) à afficher dans la zone d'affichage (5) de l'élément de commande électrique (2).
